# EUROPEAN PATENT APPLICATION

(11) **EP 2 952 792 A1**
(43) Date of publication of application: **09.12.2015**
(21) Application number: 15168053.5
(22) Date of filing: 18.05.2015
(51) Int. Cl.: F16K 17/36

(54) **ELECTRONIC GAS SAFETY CONTROL MEANS**

(30) Priority: 03.06.2014 TW 103209702
(71) Applicant: Chang, Chia-Ming, New Taipei City (TW)
(72) Inventor: Chang, Chia-Ming, New Taipei City (TW)
(74) Representative: Schwerbrock, Florian

(57) **Abstract**

An electronic gas safety control means comprises an electronic shut-off valve (10), which is normally closed, and may be opened to supply gas from a gas source (G) to a gas appliance (H) for heating purposes; and a controller (20) electrically connected to the electronic shut-off valve (10) and having at least a sensor (23) for sensing dangerous leaking gas, carbon monoxide, smoke or earthquake and also for issuing a close signal to close the electronic shut-off valve (10) for enhancing the gas safety.

## Description

### Background of the Invention:

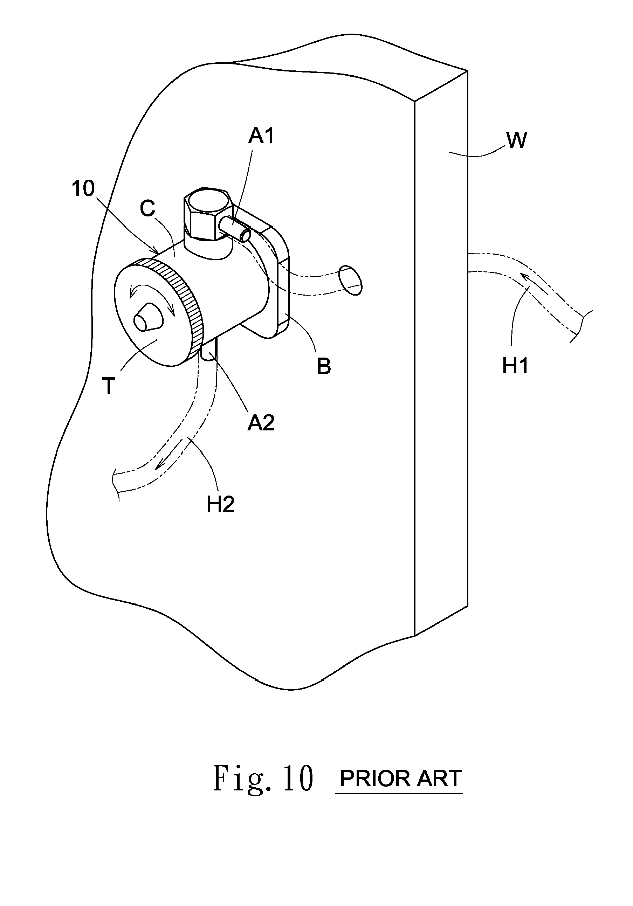

A conventional gas shut-off valve V as shown in Fig. 10 comprises a timer switch T rotatably mounted on a casing C secured on a wall W by a bracket B, an inlet gas hose H1 connected between a gas supply source (not shown) and an inlet adapted A1 fixed to the casing C, an outlet gas hose H2 connected between a gas appliance (such as a water gas heater or gas stove, not shown) and an outlet adapter A2 fixed to the casing C, whereby upon rotation of the timer switch T to a desired timing period, the gas line through the hoses H1, H2 will be opened to supply gas to the gas appliance, and upon lapse of the timing period, the gas line will be disconnected to stop the gas supply.

However, such a connectional safety shut-off valve has the following drawbacks:
1. Once opening the timer switch T to open the gas source and whenever encountering a suddenly blowing wind, the fire of the gas burner may be extinguished and the gas will be leaked continuously to a dangerous level, which when reaching a flammable limit of gas (methane of natural gas having a flammable limit ranging from 5.3 vol % through 14 vol % in the air) may cause a fire accident once ignited by a spark.
2. It is lacking of mechanism to detect the leaking gas, carbon monoxide, smoke, or even earthquake, the conventional gas shut-off valve is unsatisfactory for a safer protection.
3. The timer switch T should be rotated to a desired position for setting a timing period. Such a rotating operation seems to be very simple for ordinary people. It is however difficultly or inconveniently operated for an elderly. It is therefore not popular to be widely used in the market or families.
4. The gas valve is produced by assembling plural complex mechanical parts or elements, not the electronic components, thereby increasing the production and maintenance cost.

The present inventor has found the drawbacks of the prior art and invented the present electronic gas safety control means.

### Summary of the Invention:

The object of the present invention is to provide an electronic gas safety control means comprising: an electronic shut-off valve, including a gas inlet connected to a gas source, and a gas outlet connected to a gas appliance; and the electronic shut-off valve mounted in a gas line connected between the gas source and the gas appliance, and the electronic shut-off valve normally closed to stop gas flow in the gas line; and a main controller including a controller body, a control unit mounted in the controller body and electrically connected with the electronic shut-off valve for signal communication between the control unit and the electronic shut-off valve, and at least a sensing unit electrically connected to the control unit for sensing at least a dangerous signal which includes a detection of emission or leakage reaching a maximum or tolerable allowable concentration or limit of carbon monoxide, flammable gas, spreading of smoke, an earthquake signal, or a tsunami signal; whereby upon starting of the main controller to open the electronic shut-off valve, the gas line is opened for delivering gas from the gas source to the gas appliance for using the gas; and upon sensing of one dangerous signal by the sensing unit, the control unit operatively receives and processes the dangerous signal to send a close signal to the electronic shut-off valve to close the shut-off valve for enhancing safety.

### Brief Description of the Drawings:

Fig. 1 is a block diagram showing a first preferred embodiment of the present invention.
Fig. 2 shows a second preferred embodiment of the present invention.
Fig. 3 is an illustration showing the main controller of the present invention.
Fig. 4 shows a forced-flow gas valve of the present invention when rotated to its first position.
Fig. 5 shows the forced-flow gas valve when rotated to the second position from Fig. 4.
Fig. 6 shows an illustration when used for a gas stove in accordance with the present invention.
Fig. 7 shows another illustration when used for a water gas heater.
Fig. 8 is an electric circuit diagram for gas detection of the present invention.
Fig. 9 shows a third preferred embodiment of the present invention.
Fig. 10 shows a prior art of a gas shut-off valve.

### Detailed Description:

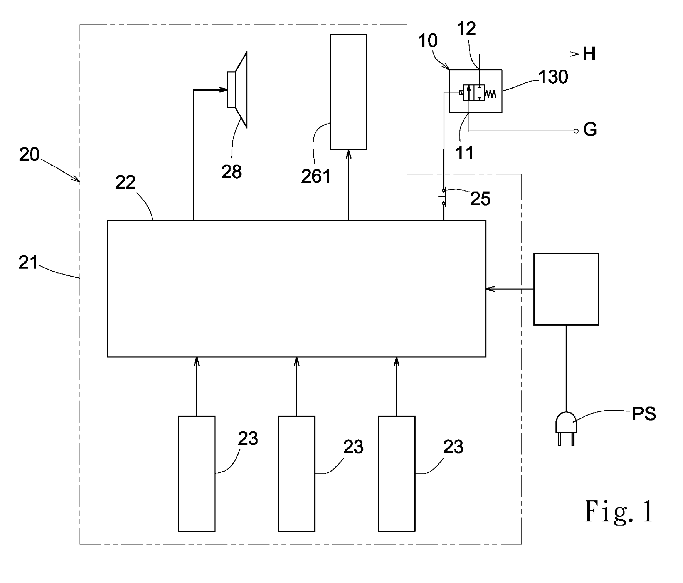

As shown in Figs. 1, 6, 7, and 9, the present invention comprises: an electronic shut-off valve 10, including a valve casing 130, a gas inlet 11 connected to a gas source G, and a gas outlet 12 connected to a gas appliance H, with the gas line connected between the gas inlet 11 and the gas outlet 12 normally closed or normally disconnected to stop gas flow therebetween; and a main controller 20, including a controller body 21, a control unit 22 mounted in the controller body 21 and electrically connected with the electronic shut-off valve 10 for signal communication between the control unit 22 and the electronic shut-off valve 10, and at least a sensing unit 23 electrically connected to the control unit 22 for sensing at least a dangerous signal; whereby upon starting of the main controller 20 to open the electronic shut-off valve 10 to thereby open or conduct the gas line between the gas inlet 11 and gas outlet 12 for delivering gas from the gas source G to the gas appliance H for using the gas; and whereby upon sensing a dangerous signal by the sensing unit 23, the control unit 22 operatively receives and processes such a dangerous signal to send a close signal to the electronic shut-off valve 10 to close the valve 10 and stop the gas flow through the gas line for safety.

Such a dangerous signal may refer to a signal for emission or leakage (reaching or exceeding a maximum or tolerable allowable concentration or level) of carbon monoxide, inflammable gas, smoke or happening of earthquake, etc.

The signal communication between the control unit 22 of the main controller 20 and the electronic shut-off valve 10 is connected by wire or by wireless connection so as to allow the main controller 20 may control the electronic shut-off valve 10 remotely.

The sensing unit 23 as connected to the control unit 22 may include a first sensing element for detecting carbon monoxide emitted due to incomplete combustion of the gas, a second sensing element for sensing inflammable gas as leaked, a third sensing element for detecting spreading smoke, a fourth sensing element for detecting earthquake, and other sensing elements for sensing the other dangerous events, not limited in the present invention.

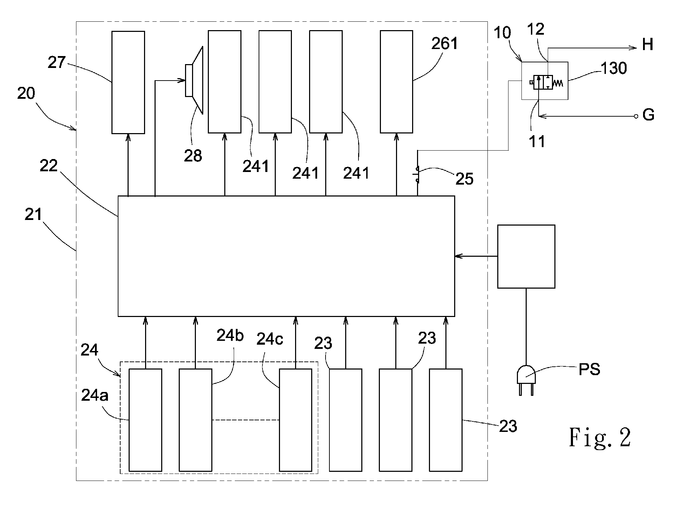

As shown in Figs. 2, 3, 6 and 7, the main controller 20 further comprises a timing unit 24 which, once being actuated, will operatively trigger an open signal to the electronic shut-off valve 10 to open the valve 10 during a pre-set timing period to supply the gas from the gas source G to the gas appliance H for using the gas; and whereby upon the lapse of the timing period, the control unit 22 will send a close signal to the electronic shut-off valve 10 to close the valve 10 to stop the gas supply. Of course, during the timing period for opening the valve 10 by actuating the timing unit 24, if the sensing unit 23 senses a dangerous signal such as the leakage or emission of carbon monoxide, smoke, or earthquake, the control unit 22 will issue a close signal to close the electronic shut-off valve 10 to stop gas supply from the gas source G to the gas appliance H.

The electronic shut-off valve 10 may be selected from the gas control valves or devices as available in the market, not limited for the structure or mechanism of the valve. The gas inlet 11 of the valve 10 may be connected to any gas source G of gas bottle or natural gas supply system.

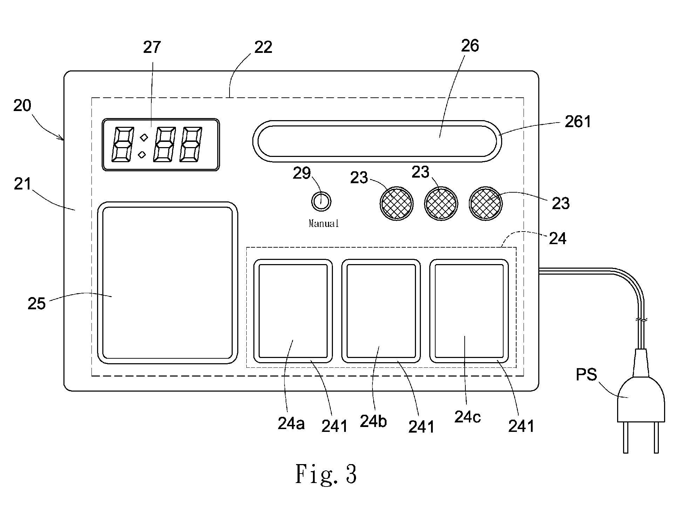

As shown in Figs. 2 and 3, the timing unit 24 comprises a plurality of timing selectors 24a, 24b, 24c, each timing selector corresponding to a specific pre-set timing period. For instance, the timing period may be 15 minutes, 30 minutes, and one hour, etc. The user may select his or her preferable timing period. The timing selectors 24a, 24b, 24c may be mounted in the controller body 21 of the main controller 20.

A plurality of timing illuminators 241 are provided, each corresponding to each timing selector 24a, 24b or 24c, for the timing unit 24, whereby upon touching of each timing selector, the corresponding timing illuminator will be lit to indicate the specific timing selector as pressed by the user. Each timing illuminator 241 may be mounted at a bottom side or by the side of each corresponding timing selector 24a, 24b or 24c.

As shown in Figs. 1, 2 and 3, the main controller 20 further comprises an emergency switch 25, connected between the control unit 22 and the electronic shut-off valve 10, whereby upon actuation of the emergency switch, the gas line between the gas inlet 11 and gas outlet 12 will be disconnected to stop gas supply from the gas source G to the gas appliance H; and upon a further actuation of the emergency switch 25, the gas inlet 11 and the gas outlet 12 will be conducted to continuously supply the gas and to continuously perform the control modes of the main controller 20.

As shown in Fig. 3, the main controller 20 comprises a main switch 26, which is electrically connected to the control unit 22 and a power source PS, whereby upon a primary actuation of the main switch 26, the power source is connected to power the circuit of the present invention to actuate the control unit 22 to issue an open signal to the electronic shut-off-valve 10 to conduct the gas line between the gas inlet 11 and gas outlet 12 for using the gas; and a further depression on the main switch 26, the power source will be disconnected to stop the gas supply from the gas source G to the gas appliance H. The main switch 26 is provided with a switch illuminator 261 which is lit to reveal the gas line being connected or opened between the gas inlet 11 and gas outlet 12, and will be turned off while a further depression of the switch 26 to stop the gas supply.

As shown in Fig. 3, the main controller 20 further comprises a display 27 which may show the time period still remained for the gas supply. A seven-segment digital display may be provided to indicate the time period.

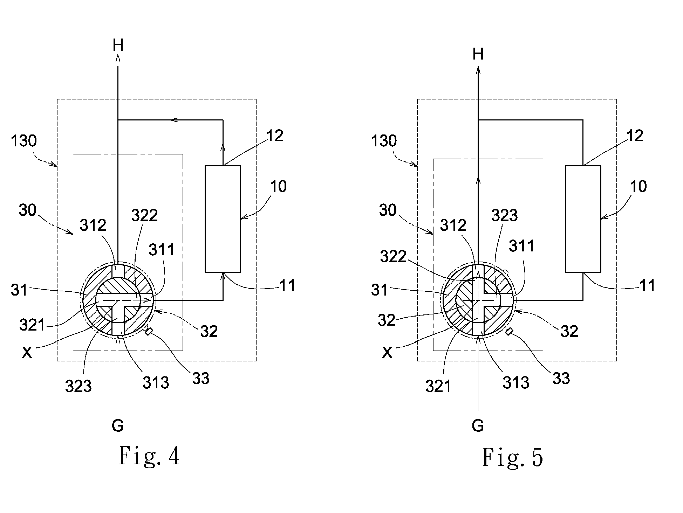

As shown in Figs. 4 and 5, the present invention further comprises a forced-flow gas valve 30 juxtapositionally mounted, in parallel to the electronic shut-off valve 10, between the gas source G and the gas appliance H; the forced-flow gas valve 30 including: a valve body 31 having a first port 311 formed in the valve body 31 and connected to said gas inlet 11 of the gas line, a second port 312 formed in the valve body 31 and connected to said gas outlet 12 and separated from said first port 311 with a right angle along a longitudinal axis X of said forced-flow gas valve 30, and a gas entrance port 313 formed in the valve body 31 and connected to said gas source G and diametrically positioned opposite to said second port 312; and a valve stem 32 rotatably mounted in said valve body 31 having a T-shaped through hole latitudinally formed in said valve stem 32 and including a diametrical through hole and a radial hole perpendicularly communicated with said diametrical through hole, having a first passage 321 and a second passage 322 diametrically disposed on opposite side portions of said diametrical through hole, and a third passage 323 matchingly formed in said radial hole; with said first passage 321, said second passage 322 and said third passage 323 cooperatively forming said T-shaped through hole; whereby upon rotation of said valve stem 32 to coincide said gas entrance port 313 of said valve body 311 with said third passage 323 of said valve stem 32 and to coincide said first port 311 of said valve body 31 with said second passage 322 of said valve stem 32 to direct gas flow from said gas source G to said inlet 11 of said electronic shut-off valve 10 and the second port 312 of said valve body 31 is closed by said valve stem 32 to thereby stop gas flow through the second port 312 into said gas appliance H (as shown in Fig. 4); and upon rotation of said valve stem 32 to coincide said first passage 321 and said second passage 322 of said valve stem 32 respectively with said gas entrance port 313 and said second port 312 of said valve body 31 to direct gas flow from said gas source G to said gas appliance H through the valve 30 (Fig. 5).

So, the stem 32 may be normally rotated to be at the first position as shown in Fig. 4, the gas line will be opened to supply gas from the gas source G to the gas appliance H for normal use of gas (but still controlled by valve 10). However, when there is power failure without power supply to the circuit of the present invention, the user may manually rotate the stem 32 (from Fig. 4 to Fig. 5) to be at the second position as shown in Fig. 5, the gas line is still conducted to supply gas from the gas source G to the gas appliance H (through valve 30) without stopping supply of gas, even if under the power failure condition.

Whenever a power failure occurs, since the shut-off valve 10 is normally closed, the gas line will be disconnected to stop gas supply at the moment of power failure. For a continuous gas supply service, the present invention provide a forced-flow gas valve 30 which comprises a position sensor 33 and a reset-reminder light indicator 29 (indicating a manually operating status) mounted on the main controller 20, whereby when the stem 32 of the forced-flow gas valve 30 is rotated to a second position (Fig. 5) to be sensed by the sensor 33, a gas line among the gas entrance port 313, the first pass 321, the second pass 322 and the second port 312 will be conducted or opened to supply gas from the gas source G to the gas appliance H and also to light up the reset-reminder light indicator 29 on the main controller 20. The reset-reminder light indicator 29 serves to give warning to the user that the stem 32 has been rotated to its second position (Fig. 5) to open the gas line between the gas source G and the gas appliance H to supply the gas continuously, also indicating that the electronic shut-off valve 10 of the present invention has been temporarily suspended or by-passed manually. By the way, such an indicator 29 will remind the user to reset or to rotate the stem 32 back to its first position (Fig. 4) to restore the function of the present invention normally, namely restoring the safety monitoring of the present invention by leading the gas flow through the gas entrance port 313, the third pass 323, the second pass 322, the first port 311, the gas inlet 11, the valve 10, and the gas outlet 12 to be operated or effected normally by the electronic shut-off valve 10 and the main controller 20 of the present invention as aforementioned.

The forced-flow gas valve 30 and the electronic shut-off valve 10 may be mounted in a same housing for a convenient installation in a house or building.

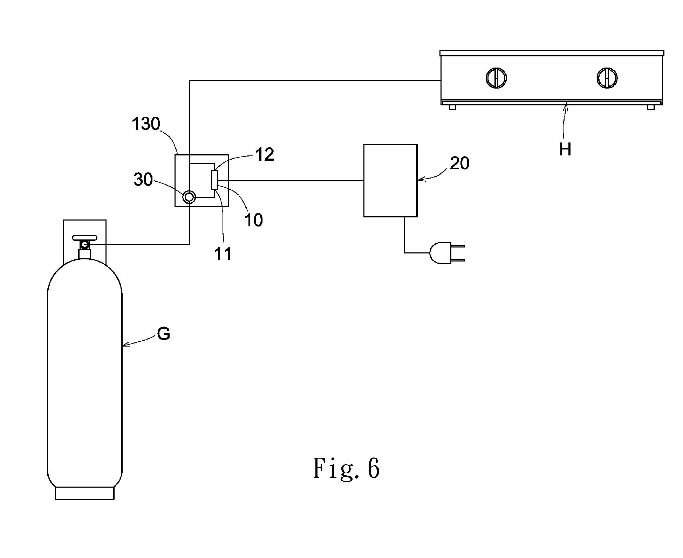

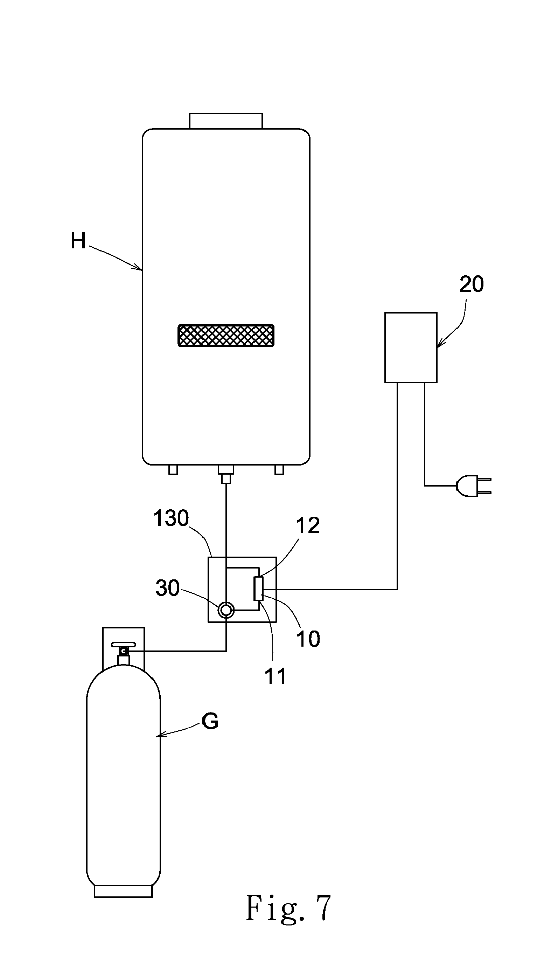

The present invention may be utilized for a gas stove as shown in Fig. 6, or a gas-fired water heater as shown in Fig. 7, or other gas appliances H.

The electronic gas safety control means of the present invention may comprise a control unit 22 of the main controller 20 connected to plural sensing elements of the sensing unit 23. For instance, the sensing element may be a detector for sensing the concentration of carbon monoxide, a detector for sensing the concentration of inflammable gas, a detector for detecting smoke, or a detector for sensing earthquake (which may be made by a gyroscope) or tsunami.

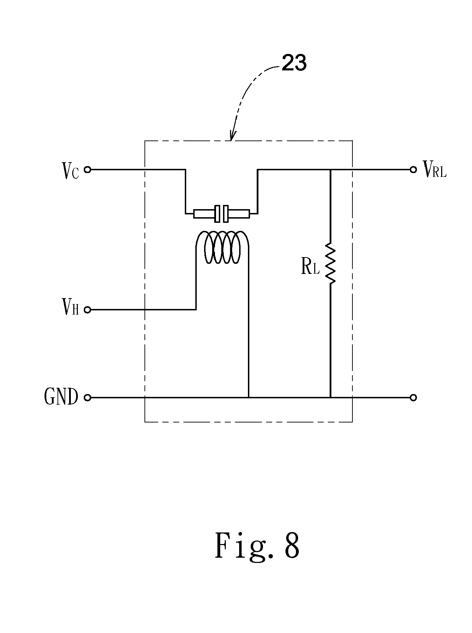

The control unit 22 further comprises an alarm 28, which will be alerted for alarm sounding or voice warning to give a warning to the user or someone nearby that a dangerous signal has been sensed. Such a dangerous signal may reflect the following events, including: reaching or exceeding a maximum allowable concentration as emitting of carbon monoxide (CO) or leaking gas, or hazardous smoke, or earthquake. As shown in Fig. 8, the sensing unit 23 may be made from gas-sensable semi-conductor of tin dioxide, and may include applying a heating voltage V_{H} to a voltage circuit (Fig. 8) to obtain a measuring voltage Vc when sensing the leaked gas or CO to be compared with a reference voltage value in order to measure the concentration of the gas or carbon monoxide as sensed. If the gas or CO concentration reaches or exceeds a pre-determined maximum allowable concentration (or the so-called dangerous concentration or limit), the control unit 22 will sense such a dangerous signal and will process to issue a close signal to close the electronic shut-ff valve 10. The above-mentioned sensing unit may be selected from those products as commercially available, not limited or discussed in detail in this invention. In Fig. 8, the V_{H} is a heating voltage, Vc being the output voltage as measured, GND as grounded, R_{L} being an impedance or resistance, and V_{RL} being voltage across the R_{L}.

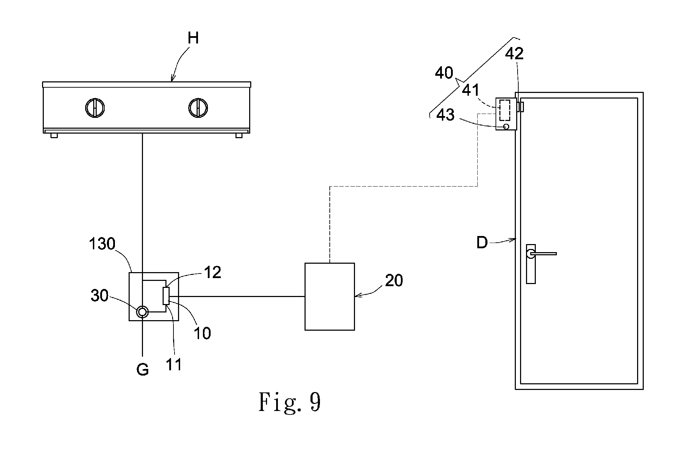

As shown in Fig. 9, the present invention further comprises an outgoing alarm means 40 electrically connected to said main controller 20 for signal communication therebetween, and mounted on a door frame or near a door D for warning or reminding a user when passing by the door and leaving his or her home; said outgoing alarm means 40 including a door-positioning sensor 42 operatively sensing a door D being opened, and a voice alarm 41 which is actuated for alarm sounding when said door-positioning sensor 42 senses the door D as being opened for warning or reminding the outgoing user to check whether his or her shut-off valve 10 is really closed.

The outgoing alarming means 40 may be connected to the main controller 20 by wire, or by remotely wireless connection, or electrically connected through a power supply circuit. The outgoing alarm means 40 further comprises a light indicator 43 which is lit when said electronic shut-off valve 10 is opened.

Even though the installation locations of the valve 10 and controller 20 are not limited in the present invention, the shut-off valve 10 is preferably mounted at a location near the gas source G, while the main controller 20 may be mounted in a kitchen or in a bathroom. Either valve 10 or controller 20 may be formed to be an integrated part, and may therefore be separately installed at the desired location, as required or expected by the user.

Naturally, the shut-off valve 10 and the main controller 20 may also be mounted in a common housing or casing to serve as a "package" for convenient commercial or industrial uses.

The present invention is superior to the conventional gas safety devices or the prior art as aforementioned with the following advantages:
1. When the gas valve is opened to supply gas for heating water or for cooking uses and when the flame of the combustion gas is accidentally extinguished by a suddenly blowing wind, the leakage of flammable gas or carbon monoxide will be sensed by the present invention and will be shut off by the controller to enhance the safety of the gas appliance without causing fire or poisoning accidents.
2. Most elements of the present invention may be made of compact electronic parts, such as IC (integrated circuits), semiconductors, PCB (printed circuit board), etc., for simplifying the assembly, production, operation and maintenance, and also for lowering the cost thereof.
3. The operation of the present invention is easier since most operation modes are simply actuated by push button, which are especially beneficial for the elderly.
4. The safety means of the present invention may be manually switched on or off; or may be operated in a pre-set time period, which will be automatically shut down when the pre-set timing period is over, being therefore used more conveniently and more selectively.

## Claims

1. An electronic gas safety control means comprising:
an electronic shut-off valve (10), including a gas inlet (11) connected to a gas source (G), and a gas outlet (12) connected to a gas appliance (H); and said electronic shut-off valve (10) mounted in a gas line connected between said gas source (G) and
said gas appliance (H), and said electronic shut-off valve (10) normally closed to stop gas flow in said gas line; and
a main controller (20) including a controller body (21), a control unit (22) mounted in said controller body (21) and electrically connected with said electronic shut-off valve (10) for signal communication between said control unit (22) and said electronic shut-off valve (10), and at least a sensing unit (23) electrically connected to said control unit (22) for sensing at least a dangerous signal which includes a detection of emission or leakage reaching a maximum or tolerable allowable concentration or limit in the air of carbon monoxide, a flammable gas, spreading of smoke, and an earthquake signal, or a tsunami signal;
whereby upon starting of said main controller (20) to open said electronic shut-off valve (10), the gas line is opened for delivering gas from said gas source (G) to said gas appliance (H) for using the gas; and upon sensing of one said dangerous signal by said sensing unit (23), said control unit (22) operatively receives and processes said dangerous signal to send a close signal to said electronic shut-off valve (10) to close said shut-off valve (10) for safety.

2. An electronic gas safety control means according to Claim 1, wherein said main controller (20) further comprises a timing unit (24) which, once being actuated, will operatively trigger an open signal to said electronic shut-off valve (10) to open said valve (10) during a per-set timing period; whereby upon the lapse of the timing period, said control unit (22) will send a close signal to said electronic shut-off valve (10) to close said valve (10).

3. An electronic gas safety control means according to Claim 2, wherein said timing unit (24) comprises a plurality of timing selectors (24a, 24b, 24c), each timing selector (24a, 24b, 24c) corresponding to a specific pre-set timing period.

4. An electronic gas safety control means according to Claim 1, wherein said main controller (20) further comprises an emergency switch (25), connected between said control unit (22) and said electronic shut-off valve (10), whereby upon actuation of said emergency switch (25), the gas line through the shut-off valve (10) between the gas inlet (11) and the gas outlet (12) will be disconnected to shut off the gas supply to the gas appliance (H).

5. An electronic gas safety control means according to Claim 1, wherein said main controller (20) further comprises a main switch (26) connected between said electronic shut-off valve (10) and a power source (PS), whereby upon a primary actuation of said main switch (26), the power source (PS) will be conducted and an open signal will be issued from said control unit (22) to said electronic shut-off valve (10) to open a gas line between said gas inlet (11) and gas outlet (12) of said valve (10); and a secondary actuation of said main switch (26), a close signal will be issued from said control unit (22) to said electronic shut-off valve (10) to close the gas line between said gas inlet (11) and said gas outlet (12) of said valve (10).

6. An electronic gas safety control means according to Claim 2, wherein said main controller (20) further comprises a display (27) formed on the controller body (21) for displaying the remaining time of the pre-set timing period upon actuation of said timing unit (24).

7. An electronic gas safety control means according to Claim 1, wherein said electronic shut-off valve (10) is juxtapositionally mounted with a forced-flow gas valve (30) in parallel to said electronic shut-off valve (10) between said gas source (G) and said gas appliance (H); said forced-flow gas valve (30) including:
a valve body (31) having a first port (311) formed in the valve body (31) and connected to said gas inlet (11) of the gas line, a second port (312) formed in the valve body (31) and connected to said gas outlet (12) and separated from said first port (311) with a right angle along a longitudinal axis (X) of said forced-flow gas valve (30), and a gas entrance port (313) formed in the valve body (31) and connected to said gas source (G) and diametrically positioned opposite to said second port (312); and
a valve stem (32) rotatably mounted in said valve body (31) having a T-shaped through hole latitudinally formed in said valve stem (32) and including a diametrical through hole and a radial hole perpendicularly communicated with said diametrical through hole, having a first passage (321) and a second passage (322) diametrically disposed on opposite side portions of said diametrical through hole, and a third passage (323) matchingly formed in said radial hole; with said first passage (321), said second passage (322) and said third passage (323) cooperatively forming said T-shaped through hole;
whereby upon rotation of said valve stem (32) to a first position to coincide said gas entrance port (313) of said valve body (31) with said third passage (323) of said valve stem (32) and to coincide said first port (311) of said valve body (31) with said second passage (322) of said valve stem to direct gas flow from said gas source (G) to said gas inlet (11) of said electronic shut-off valve (10) and to close the second port (312) of said valve body (31) by said valve stem (32) so as to lead the gas flow through said electronic shut-off valve (10) into said gas appliance (H) to use the gas normally; and upon rotation of said valve stem (32) to a second position to coincide said first passage (321) and said second passage (322) of said valve stem (32) respectively with said gas entrance port (313) and said second port (312) of said valve body (31) to direct gas flow from said gas source (G) through said force-flow gas valve (30) to said gas appliance (H) without interruption of gas supply in case of power failure.

8. An electronic gas safety control means according to Claim 7, wherein said forced-flow gas valve (30) further comprises a position sensor (33) and a reset-reminder light indicator (29) mounted on the main controller (20), whereby when the valve stem (32) is rotated to the second position to be sensed by the position sensor (33), the reset-reminder light indicator (29) will be lit to indicate a manually operating status of the valve stem (32) when power failure.

9. An electronic gas safety control means according to Claim 7, wherein said forced-flow gas valve (30) and said electronic shut-off valve (10) are mounted in a common casing.

10. An electronic gas safety control means according to Claim 1, wherein said sensing unit (23) comprises a first sensing element for detecting carbon monoxide, a second sensing element for sensing inflammable gas, a third sensing element for detecting spreading smoke, a fourth sensing element for detecting earthquake, and a fifth sensing element for detecting tsunami.

11. An electronic gas safety control means according to Claim 1, wherein said control unit (22) further comprises an alarm (28) including an audible alarm and a light indicating alarm, whereby upon sensing of a dangerous signal which reaches a predetermined value or level of a flammable gas concentration, a hazardous carbon monoxide concentration, a smoke spreading, and a dangerous earthquake or tsunami; an alarm will be issued for safety warning.

12. An electronic gas safety control means according to Claim 1, wherein said electronic shut-off valve (10) and said main controller (20) are mounted in a common housing or are each separately secured in each individual casing.

13. An electronic gas safety control means according to Claim 1, wherein said main controller (20) further comprises an outgoing alarm means (40) electrically connected to said main controller (20) for signal communication therebetween, and mounted on a door frame or near a door (D) for warning or reminding a user when passing by the door (D) for leaving his or her home; said outgoing alarm means (40) including a door-positioning sensor (42) operatively sensing a door being opened, and a voice alarm (41) which is actuated for alarm sounding when said door-positioning sensor (42) senses the door (D) as being opened for warning or reminding the outgoing user to check whether his or her shut-off valve (10) is really closed.

14. An electronic gas safety control means according to Claim 13, wherein said outgoing alarm means (40) further comprises a light indicator (43) which is lit when said electronic shut-off valve (10) is opened.
